# EUROPEAN PATENT APPLICATION

(11) **EP 4 049 810 A1**
(43) Date of publication of application: **31.08.2022**
(21) Application number: 21159474.2
(22) Date of filing: 26.02.2021
(51) Int. Cl.: B25J 15/04

(54) **A ROBOTIC TOOL CHANGE SYSTEM**

(71) Applicant: VOLVO TRUCK CORPORATION, 405 08 Göteborg (SE)
(72) Inventor: LUNDIN, Tobias, 711 98 Ramsberg (SE)
(74) Representative: Zacco Sweden AB

(57) **Abstract**

The invention relates to a robotic tool change system (1), comprising a first part (2) configured to be arranged onto a robot arm of a robot and a second part (3) configured to be arranged on a tool or object to be used by the robot, wherein the first and second parts (2, 3) are configured to be connected to and disconnected from each other so as to allow for changing of tool or object to be used by the robot, and wherein the first and second parts (2, 3) are configured to be brought together with a connection side (2a) of the first part (2) facing a connection side (3a) of the second part (3) when to be connected. The first part (2) is provided with a retractable vacuum bellows (4) that projects away from the connection side (2a) of the first part (2) and that, when the first and second parts (2, 3) are positioned in relation to each other so as to admit connection, projects towards the connection side (3a) of the second part (3), wherein the retractable vacuum bellows (4) has an end opening (5) that faces away from the first part (2) and that, when the first and second parts (2, 3) are positioned in relation to each other so as to admit connection, faces the connection side (3a) of the second part (3), and wherein the retractable vacuum bellows (4) is arranged to, when a suction pressure is established in the vacuum bellows (4), attach to the second part (3) via its end opening (5) and bring together the first and second parts (2, 3) for connection.

## Description

### TECHNICAL FIELD

The invention relates to a robotic tool change system comprising a first part configured to be arranged onto a robot arm of a robot and a second part configured to be arranged on a tool or object to be used by the robot, wherein the first and second parts are configured to be connected to and disconnected from each other so as to allow for changing of tool or object to be used by the robot. In particular the invention relates to collaborative robots and to situations where humans and robots interact and use the same tools.

### BACKGROUND

There is an increasing interest for using robots in the industry, for instance in manufacturing lines and similar. The use of such robots often involves a robotic tool change system that allows for changing of tool or object to be used by the robot. The robotic tool change system normally includes a first part configured to be arranged onto a robot arm of the robot and a second part configured to be arranged on the tool or object to be used by the robot, where the first and second parts are configured to be connected to and disconnected from each other. Besides holding of the tool, the robotic tool change system is to provide for a supply of electrical current, air pressure, etc. for operation of the tool. In addition, data signals might need to be transferred between the robot and the tool.

Conventionally, robot tools that are not in use are placed in supports that hold the tools steady and in a position that is predetermined and "exactly" known (within parts of a mm) so that a control system arranged to control the robot can orient and align the robot arm properly before connecting the arm and the tool. The first and second parts of the robotic tool change system are often provided with conventional steering pins to secure proper alignment at connection.

Some kind of electromagnetic arrangement is often used to firmly fix the tool to the robot arm after connection.

US9731392B2 relates to robotic tool changer alignment modules and discloses e.g. a three-axis spatial orientation sensor and an optical position indicator for achieving spatial orientation and precise alignment of a robot arm relative to a robotic tool.

A subfield within the field of industry robots is collaborative robots, sometimes referred to as "cobots", where humans and robots interact within a shared space or in close proximity. To allow both humans and robots to use the same tools and still work efficiently it is important that both humans and robots can quickly switch tool, i.e. the processes for releasing/disconnecting a tool and grabbing/connecting another tool must be efficient. For humans an efficient measure is to let the tools hang from wires or use simple holders that allow for easy release or grabbing of the tool (or simply place the tools onto a surface), but this makes it difficult for the robots to orient and align properly before connection as the exact position of the tool is not known (to the control system trying to orient and align the robot arm), and in particular in the case of tools hanging in wires there is an additional challenge as there is nothing that holds the tool steady (sideways). On the other hand, tool supports providing exact positioning are inefficient to use for humans as it requires a thorough and time consuming handling of the tool, in particular for certifying that the tool is correctly positioned when placed in the support after use.

There is thus a need for an improved robotic tool change system that is better adapted to collaborative robots and to situations where humans and robots interact and use the same tools.

### SUMMARY

An object of the invention is to provide a robotic tool change system that provides for an improved man-robot cooperation where both humans and robots may use the same tools. This object is achieved by a system according to claim 1. Another object is to provide a method for operating such a robotic tool change system.

Further advantages and advantageous features of the invention are disclosed in the following description and in the dependent claims.

The system of this disclosure concerns a robotic tool change system comprising a first part configured to be arranged onto a robot arm of a robot and a second part configured to be arranged on a tool or object to be used by the robot, wherein the first and second parts are configured to be connected to and disconnected from each other so as to allow for changing of tool or object to be used by the robot, wherein the first and second parts are configured to be brought together with a connection side of the first part facing a connection side of the second part when to be connected.

Further, the first part is provided with a retractable vacuum bellows that projects away from the connection side of the first part and that, when the first and second parts are positioned in relation to each other so as to admit connection, projects towards the connection side of the second part, wherein the retractable vacuum bellows has an end opening that faces away from the first part and that, when the first and second parts are positioned in relation to each other so as to admit connection, faces the connection side of the second part, and wherein the retractable vacuum bellows is arranged to, when a suction pressure is established in the vacuum bellows, attach to the second part via its end opening and bring together the first and second parts for connection.

Such a design of the robotic tool change system has the advantageous effect of, by means of the retractable vacuum bellows, allowing the first and second part to be brought together and be connected even if the tool e.g. is hanging freely (sideways) in a wire. The first part gets a firm grip onto the second part using the (end opening of the) vacuum bellows, and when the grip is established the vacuum bellows retracts and the two parts are brought together for connection. Some misalignment can be taken care of by providing the first and second parts with some alignment structure, such as steering pins (and corresponding opening for receiving the steering pins).

Once the two parts have been brought together, a locking mechanism, such as an electromagnetic locking mechanism, can be activated so as to fix the two parts to each other. After locking/fixing, the suction pressure may be turned off. What is needed before connection is only to approximately orient the first and second parts (i.e. the robot arm and the tool) in relation to each other before establishing the suction pressure. This may be done using e.g. a 3D scanning system or, if the tools are placed in holders or supports (that provide for an approximately correct and known position but may provide for a less "exact" position than holders for conventional robots), by using the concept of "known" positions (i.e. known by the control system controlling the robot, but not necessarily known to the exact degree required for conventional robots).

The range of (electro)magnetic forces is relatively short so it is difficult to use such forces for bringing the two parts together from a starting position where there is a relatively large distance between the two parts.

The retractable vacuum bellows is useful also for picking up and connect to tools placed on surfaces.

In an embodiment the first and second parts are provided with an alignment structure configured to align the first and second part in relation to each other when brought together for connection.

In an embodiment the alignment structure comprises first and second spaced-apart steering pins and first and second corresponding spaced-apart steering pin-receiving holes. In principle, the steering pins may be located on either the first or second part (with the corresponding receiving holes on the opposite part) or one steering pin may be located on the first part and the other on the second part. However, placing the pins on the tool-part can be an advantage for reducing material on the tool-part and for creating an as large surface as possible between magnets and alignment structure when connecting the two parts. It should also be noted that there may be more than two steering pins.

In an embodiment the retractable vacuum bellows projects a longer distance from the connection side of the first part than each steering pin projects from the connection side of that first or second part it is attached to. Accordingly, the vacuum bellows will come in contact with the second part (the tool) before the steering pins start interacting with the corresponding openings.

In an embodiment the system comprises an electromagnetic arrangement configured to hold together the first and second parts when brought together for connection.

In an embodiment the electromagnetic arrangement comprises at least one permanent magnet arranged on the connection side of the first part, and wherein at least a portion of the second part, namely a portion that is located in the vicinity of the permanent magnet when the first and second parts are brought together for connection, is made of a material that has magnetic properties so that an attractive magnetic force between the permanent magnet and said portion of the second part is created when the first and second parts are brought together for connection, and wherein the electromagnetic arrangement further comprises an electromagnet arranged in association with the permanent magnet, wherein the electromagnet is configured to, when activated, cancel out the magnetic field from the permanent magnet and thus neutralize the attractive magnetic force and allow for release and disconnection of the first and second parts.

The permanent magnet may be a neodymium magnet and the material of the second part having magnetic properties may be steel.

In an embodiment the system comprises an arrangement configured to at least roughly orient the first and second parts in relation to each other before bringing together and connecting the first and second parts. As mentioned above, this is particularly useful when the tool is hanging in a wire and the exact position is not known in a sufficiently exact way. It may not, however, be necessary to use such an orientation arrangement if the tool is positioned in a holder or support or similar where its position can be known on a more detailed level compared to a tool hanging in a wire, but not necessarily on the very detailed level necessary for conventional robot systems.

In an embodiment the arrangement for at least roughly orienting the first and second parts in relation to each other comprises a 3D scanning system. Several cameras may be used to secure that the tool is visible for at least one of the cameras.

In an embodiment where the alignment structure comprises steering pins, at least one of the steering pins has at least one conical section and at least one section having the shape of a circular cylinder, and wherein the corresponding steering pin-receiving hole has sections corresponding to the shape of the steering-pin sections so as to provide both for alignment while the first and second parts are brought together as well as for a tight fit of the first and second parts when fully brought together and connected.

The conical section of the steering pin and the conical section of the receiving hole can thus interact similar to conventional steering pins, while the sections having the shape of a circular cylinder provide for a tight fit and reduce the risk that the two parts are disconnected by a bending force.

In an embodiment the first part has an elongated shape, wherein the retractable vacuum bellows is positioned substantially in the middle of the first part, and wherein first and second electromagnetic arrangements are arranged on opposite sides of the retractable vacuum bellows.

In an embodiment the first and second spaced-apart steering pins are arranged on the second part.

In an embodiment the system comprises a sensor configured to sense whether the end opening of the retractable vacuum bellows has been attached to the second part. This can be a vacuum sensor arranged to sense vacuum in the bellows. Further sensors may be used of course, such as sensors for determining whether the tool-part has been properly connected to the robot-part.

The invention also relates to a method for operating a robotic tool change system of the above type, the method comprising: providing the first and second parts in a disconnected configuration; positioning the first and second parts in relation to each other so as to admit connection with the retractable vacuum bellows projecting towards the connection side of the second part; establishing a suction pressure in the retractable vacuum bellows; and allowing the retractable vacuum bellows to attach to the second part via its end opening and bring together the first and second parts for connection.

In an embodiment the method further comprising: turning off the suction pressure in the retractable vacuum bellows when the first and second part have been fully brought together.

In an embodiment the method further comprising: controlling whether the retractable vacuum bellows has attached to the second part using a sensor signal from a sensor configured to sense whether the end opening of the retractable vacuum bellows has been attached to the second part.

### BRIEF DESCRIPTION OF THE DRAWINGS

With reference to the appended drawings, below follows a more detailed description of embodiments of the invention cited as examples.

In the drawings:
Fig. 1 shows a side view of an embodiment of the inventive robotic tool change system where the two parts are not yet brought together for connection.
Fig. 2 shows a sectional view A-A of a part of the embodiment according to figure 1.
Fig. 3 shows a perspective view of the embodiment according to figure 1.
Fig. 4 shows a side view of the embodiment according to figure 1 where the two parts have been brought together and connected.
Fig. 5 shows a sectional view A-A of a part of the embodiment according to figure 4.
Fig. 6 shows a perspective view of the embodiment according to figure 3.

### DETAILED DESCRIPTION OF EXAMPLE EMBODIMENTS OF THE INVENTION

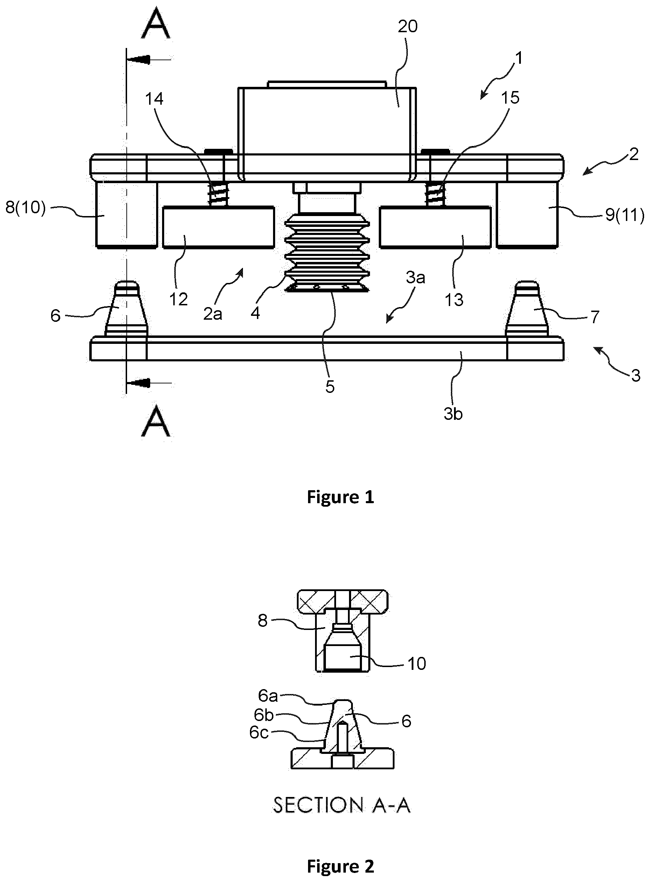

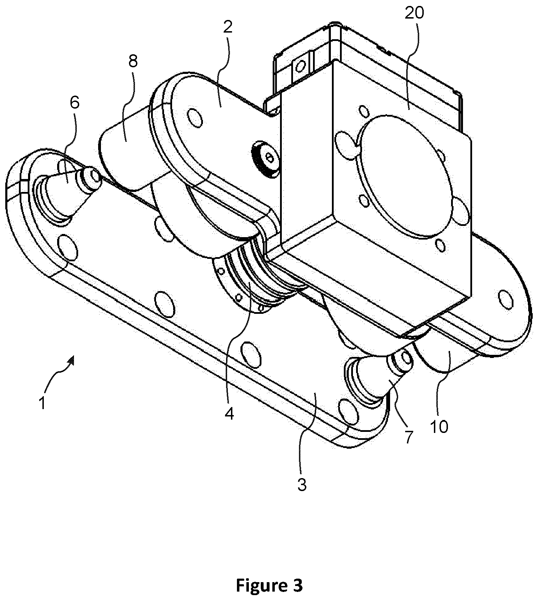

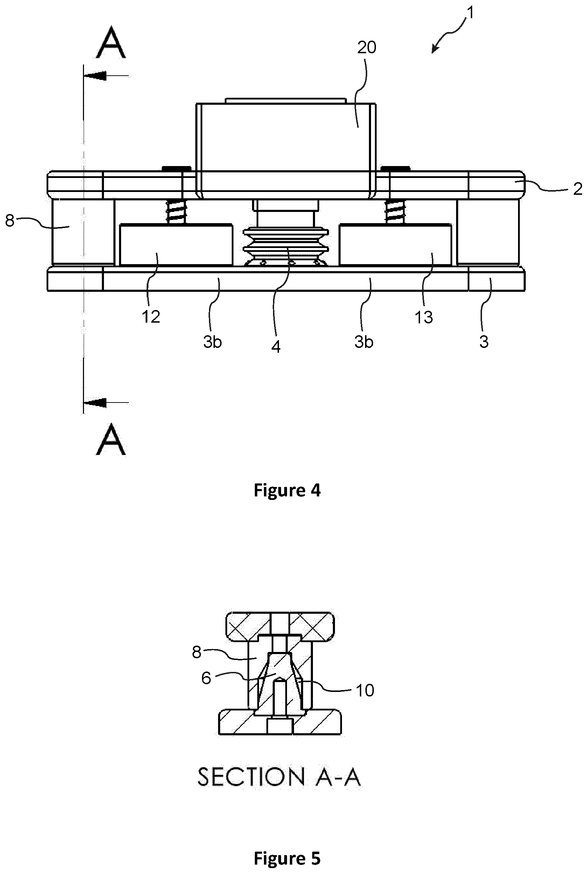

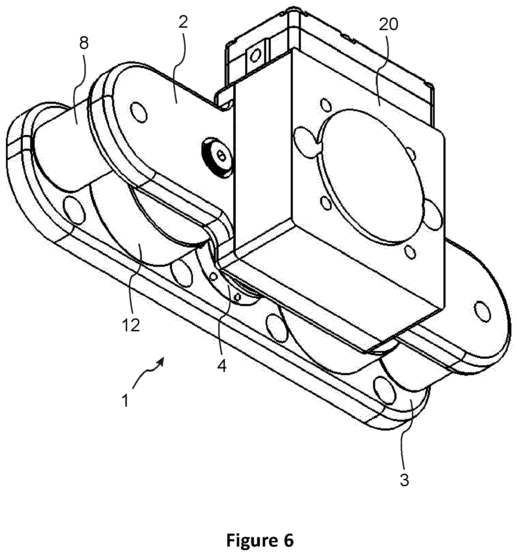

Figures 1-6 show an embodiment of a robotic tool change system 1 according to this disclosure. Figures 1-3 show the system 1 before connection (or after disconnection) and figures 4-6 show the system when connected.

As shown in figure 1, the robotic tool change system 1 comprises a first part 2 configured to be arranged onto a robot arm (not shown) of a robot (not shown) and a second part 3 configured to be arranged on a tool or object (not shown) to be used by the robot. The first and second parts 2, 3 are configured to be connected to and disconnected from each other so as to allow for changing of tool or object to be used by the robot, and the first and second parts 2, 3 are configured to be brought together with a connection side 2a of the first part 2 facing a connection side 3a of the second part 3 when to be connected.

The first part 2 is provided with a retractable vacuum bellows 4 that projects away from the connection side 2a of the first part 2 and that, when the first and second parts 2, 3 are positioned in relation to each other so as to admit connection (see figure 1), projects towards the connection side 3a of the second part 3.

The retractable vacuum bellows 4 has an end opening 5 that faces away from the first part 2 and that, when the first and second parts 2, 3 are positioned in relation to each other so as to admit connection (see figure 1), faces the connection side 3a of the second part 3. The retractable vacuum bellows 4 is arranged to, when a suction pressure is established in the vacuum bellows 4, attach to the second part 3 via its end opening 5 and bring together the first and second parts 2, 3 for connection.

As can be seen in e.g. figures 1-2, the first and second parts 2, 3 are provided with an alignment structure 6, 7, 8, 9, 10, 11 configured to align the first and second parts 2, 3 in relation to each other when brought together for connection. The alignment structure comprises in this example first and second spaced-apart steering pins 6, 7 arranged onto the second part 3 and first and second corresponding spaced-apart steering pin-receiving holes 10, 11, which are located inside cylinders 8, 9 arranged onto the first part 2.

As shown in figures 2 and 5, each of the steering pins 6, 7 has one conical section 6b and two sections 6a, 6c having the shape of a circular cylinder. The corresponding steering pin-receiving hole 10, 11 has sections corresponding to the shape of the steering-pin sections 6a, 6b, 6c so as to provide both for alignment while the first and second parts 2, 3 are brought together as well as for a tight fit of the first and second parts 2, 3 when fully brought together and connected. As can be seen in figures 2 and 5, the conical section of the receiving hole 10 does not have exactly the same conical shape as the conical section 6b of the steering pin. However, the sections of the hole 10 having the shape of a circular cylinder are adapted to the corresponding sections 6a, 6c of the steering pin 6 so that the final fit becomes tight (see figure 5).

Figure 1 further shows that the retractable vacuum bellows 5 projects a longer distance from the connection side 2a of the first part 2 than each steering pin 6, 7 projects from the connection side 3a of the second part 3 and also than the cylinders 8, 9 project from the connection side 2a of the second part 2. The retractable vacuum bellows 5 thus has a farther reach and will contact the second part 3 before the alignment structure comes in contact. This means that the robot arm does not have to come very close to the tool for the purpose of gripping the tool and connecting the first and second parts 2, 3. This may be of particular advantage when it is not desired to let the robot arm or the "hard ware" of the first part (i.e. everything except the bellows 4) come to close to a surface where the tool is placed.

The robotic tool change system 1 further comprises an electromagnetic arrangement 12, 13, 14, 15 for holding together the first and second parts 2, 3 when brought together for connection. The electromagnetic arrangement is also used for disconnecting the first and second parts 2, 3.

As shown or at least indicated in figures 1, 3, 4 and 6 the electromagnetic arrangement comprises two permanent magnets 12, 13 arranged on the connection side 2a of the first part 2. At least a portion 3b of the second part 3 located in the vicinity of the permanent magnet 12, 13 when the first and second parts 2, 3 are brought together for connection, is made of a material that has magnetic properties so that an attractive magnetic force between the permanent magnet 12, 13 and said portion 3b of the second part 3 is created when the first and second parts 2, 3 are brought together for connection. In this case the second part 3 is made of steel so more or less the entire second part exhibit said magnetic properties.

The electromagnetic arrangement further comprises two electromagnets 14, 15, each being arranged in association with a corresponding permanent magnet 12, 13. When the electromagnets 14, 15 are activated, i.e. a current is supplied, the magnetic fields from the permanent magnets 12, 13 are cancelled out, which neutralizes the attractive magnetic force and allows for release and disconnection of the first and second parts 2, 3.

A "box" 20 is arranged on the first part 2. The box 20 is further connected to the robot (not shown) and is involved in providing a suction pressure in the retractable vacuum bellows 4 and in supplying an electric current to the electromagnets 14, 15. The exact design of box 20 may be adapted to e.g. different robot suppliers.

The robotic tool change system 1 may further comprise an arrangement for at least roughly orienting the first and second parts 2, 3 in relation to each other before bringing together and connecting them. Such orientation arrangements are known as such and may comprise a 3D scanning system.

The robotic tool change system 1 may further comprise a control unit (not shown) for controlling connection and disconnection of the robot arm/first part 2 and the tool/second part 3. The control unit may also control the general operation of the robot. Control systems and control units etc. of this type are known as such.

In the example shown here, both the first and the second part 2, 3 has an elongated shape, and the retractable vacuum bellows 4 is positioned substantially in the middle of the first part 2. First and second electromagnetic arrangements 12, 13, 14, 15 are arranged on opposite sides of the retractable vacuum bellows 4.

The robotic tool change system 1 may further be provided with a sensor (not shown) configured to sense whether the end opening 5 of the retractable vacuum bellows 4 has been attached to the second part 3. The end opening 5 may be provided with a rubber ring for sealing purposes. When a suction force is established in the bellows 4 air flows into the bellows 4 and further towards the robot via box 20. When the end opening 5 is fitted in a sealing manner to the second part 3, air no longer flows along this path and vacuum (or at least a low pressure) is instead created, which can be sensed by a sensor.

An example of a method for operating the robotic tool change system 1 comprises the following steps:
- providing the first and second parts 2, 3 in a disconnected configuration;
- positioning the first and second parts 2, 3 in relation to each other so as to admit connection with the retractable vacuum bellows 4)projecting towards the connection side 3a of the second part 3;
- establishing a suction pressure in the retractable vacuum bellows 4; and
- allowing the retractable vacuum bellows 4 to attach to the second part 3 via its end opening 5 and bring together the first and second parts 2, 3 for connection; and
- turning off the suction pressure in the retractable vacuum bellows 4 when the first and second parts 2, 3 have been fully brought together.

The method may also comprise the step of:
- controlling whether the retractable vacuum bellows 4 has attached to the second part 3 using a sensor signal from a sensor configured to sense whether the end opening 5 of the retractable vacuum bellows 4 has been attached to the second part 3.

It is to be understood that the present invention is not limited to the embodiments described above and illustrated in the drawings; rather, the skilled person will recognize that many changes and modifications may be made within the scope of the appended claims.

## Claims

1. A robotic tool change system (1), comprising a first part (2) configured to be arranged onto a robot arm of a robot and a second part (3) configured to be arranged on a tool or object to be used by the robot,
wherein the first and second parts (2, 3) are configured to be connected to and disconnected from each other so as to allow for changing of tool or object to be used by the robot,
wherein the first and second parts (2, 3) are configured to be brought together with a connection side (2a) of the first part (2) facing a connection side (3a) of the second part (3) when to be connected,
**characterized in**
**that** the first part (2) is provided with a retractable vacuum bellows (4) that projects away from the connection side (2a) of the first part (2) and that, when the first and second parts (2, 3) are positioned in relation to each other so as to admit connection, projects towards the connection side (3a) of the second part (3),
wherein the retractable vacuum bellows (4) has an end opening (5) that faces away from the first part (2) and that, when the first and second parts (2, 3) are positioned in relation to each other so as to admit connection, faces the connection side (3a) of the second part (3), wherein the retractable vacuum bellows (4) is arranged to, when a suction pressure is established in the vacuum bellows (4), attach to the second part (3) via its end opening (5) and bring together the first and second parts (2, 3) for connection.

2. The robotic tool change system (1) according to claim 1, wherein the first and second parts (2, 3) are provided with an alignment structure (6, 7, 8, 9, 10, 11) configured to align the first and second parts (2, 3) in relation to each other when brought together for connection.

3. The robotic tool change system (1) according to claim 2, wherein the alignment structure comprises first and second spaced-apart steering pins (6, 7) and first and second corresponding spaced-apart steering pin-receiving holes (10, 11).

4. The robotic tool change system (1) according to claim 3, wherein the retractable vacuum bellows (5) projects a longer distance from the connection side (2a) of the first part (2) than each steering pin (6, 7) projects from the connection side (3a) of that first or second part (3) it is attached to.

5. The robotic tool change system (1) according to any of the above claims, wherein the system comprises an electromagnetic arrangement (12, 13, 14, 15) configured to hold together the first and second parts (2, 3) when brought together for connection.

6. The robotic tool change system (1) according to claim 5, wherein the electromagnetic arrangement comprises at least one permanent magnet (12, 13) arranged on the connection side (2a) of the first part (2),
and wherein at least a portion (3b) of the second part (3), namely a portion that is located in the vicinity of the permanent magnet (12, 13) when the first and second parts (2, 3) are brought together for connection, is made of a material that has magnetic properties so that an attractive magnetic force between the permanent magnet (12, 13) and said portion (3b) of the second part (3) is created when the first and second parts (2, 3) are brought together for connection,
and wherein the electromagnetic arrangement further comprises an electromagnet (14, 15) arranged in association with the permanent magnet (12, 13), wherein the electromagnet (14, 15) is configured to, when activated, cancel out the magnetic field from the permanent magnet (12, 13) and thus neutralize the attractive magnetic force and allow for release and disconnection of the first and second parts (2, 3).

7. The robotic tool change system (1) according to any of the above claims, wherein the system comprises an arrangement configured to at least roughly orient the first and second parts in relation to each other before bringing together and connecting the first and second parts (2, 3).

8. The robotic tool change system (1) according to claim 7, wherein the arrangement for at least roughly orienting the first and second parts in relation to each other comprises a 3D scanning system.

9. The robotic tool change system (1) according to claim 3, wherein at least one of the steering pins (6, 7) has at least one conical section (6b) and at least one section (6a, 6c) having the shape of a circular cylinder, and wherein the corresponding steering pin-receiving hole (10, 11) has sections corresponding to the shape of the steering-pin sections (6a, 6b, 6c) so as to provide both for alignment while the first and second parts (2, 3) are brought together as well as for a tight fit of the first and second parts (2, 3) when fully brought together and connected.

10. The robotic tool change system (1) according to claim 5, wherein the first part (2) has an elongated shape, wherein the retractable vacuum bellows (4) is positioned substantially in the middle of the first part (2), and wherein first and second electromagnetic arrangements (12, 13, 14, 15) are arranged on opposite sides of the retractable vacuum bellows (4).

11. The robotic tool change system (1) according to claim 3, wherein the first and second spaced-apart steering pins (6, 7) are arranged on the second part (3).

12. The robotic tool change system (1) according to any of the above claims, wherein the system comprises a sensor configured to sense whether the end opening (5) of the retractable vacuum bellows (4) has been attached to the second part (3).

13. Method for operating a robotic tool change system (1) according to any of the above claims, the method comprising:
- providing the first and second parts (2, 3) in a disconnected configuration;
- positioning the first and second parts (2, 3) in relation to each other so as to admit connection with the retractable vacuum bellows (4) projecting towards the connection side (3a) of the second part (3);
- establishing a suction pressure in the retractable vacuum bellows (4); and
- allowing the retractable vacuum bellows (4) to attach to the second part (3) via its end opening (5) and bring together the first and second parts (2, 3) for connection.

14. Method according to claim 13, the method further comprising:
- turning off the suction pressure in the retractable vacuum bellows (4) when the first and second parts (2, 3) have been fully brought together.

15. Method according to claim 13 or 14, the method further comprising:
- controlling whether the retractable vacuum bellows (4) has attached to the second part (3) using a sensor signal from a sensor configured to sense whether the end opening (5) of the retractable vacuum bellows (4) has been attached to the second part (3).
